(19) **Europäisches Patentamt / European Patent Office / Office européen des brevets**

(11)　**EP 3 580 103 B1**

(12)　# FASCICULE DE BREVET EUROPEEN

(45) Date de publication et mention de la délivrance du brevet:
**09.11.2022　Bulletin 2022/45**

(21) Numéro de dépôt: **18701522.7**

(22) Date de dépôt: **12.01.2018**

(51) Classification Internationale des Brevets (IPC):
**B60W 10/06** *(2006.01)*　　**B60W 10/08** *(2006.01)*
**B60W 10/10** *(2012.01)*　　**B60W 30/19** *(2012.01)*
**B60W 20/10** *(2016.01)*　　**B60W 10/113** *(2012.01)*
**B60W 50/00** *(2006.01)*

(52) Classification Coopérative des Brevets (CPC):
**B60W 10/06; B60W 10/08; B60W 10/10;**
**B60W 20/10; B60W 30/19;** B60W 10/113;
B60W 50/0097; B60W 2510/1005;
B60W 2710/0666; B60W 2710/083; B60W 2720/30;
Y02T 10/62

(86) Numéro de dépôt international:
**PCT/FR2018/050080**

(87) Numéro de publication internationale:
**WO 2018/146394 (16.08.2018 Gazette 2018/33)**

(54) **PROCÉDÉ D'ÉLABORATION DE LA CONSIGNE DE COUPLE AUX ACTIONNEURS D'UN GROUPE MOTOPROPULSEUR HYBRIDE**

VERFAHREN ZUR FORMULIERUNG DES SOLLDREHMOMENTS AN DEN AKTUATOREN EINES HYBRIDKRAFTWERKS

METHOD FOR FORMULATING THE SETPOINT TORQUE AT THE ACTUATORS OF A HYBRID POWERPLANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.02.2017　FR 1751083**

(43) Date de publication de la demande:
**18.12.2019　Bulletin 2019/51**

(73) Titulaire: **Renault s.a.s**
**92100 Boulogne Billancourt (FR)**

(72) Inventeurs:
• **LE ROY, Loïc**
**91370 Verrieres le Buisson (FR)**

• **RUEL, Jean-Martin**
**91360 Epinay sur Orge (FR)**
• **LEFEVRE, Auréllien**
**91300 Massy (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A2- 1 078 804　　WO-A1-2014/162076**
**DE-A1- 10 138 998**

EP 3 580 103 B1

**Description**

La présente invention concerne le pilotage en couple d'un véhicule hybride, en fonction de la demande exprimée par le conducteur en enfonçant sa pédale d'accélérateur.

Plus précisément, cette invention a pour objet un procédé d'élaboration de la consigne de couple aux actionneurs d'un groupe motopropulseur (GMP) hybride pendant un changement de rapport, dans lequel les actionneurs sont placés, en dehors des phases de changement de rapport, sous le contrôle exclusif d'un calculateur d'actionneurs, qui impose à ces derniers des requêtes de couple réparties en application d'une loi de gestion de l'énergie satisfaisant une demande du conducteur traduite en demande de couple global aux roues indépendamment du rapport réel de démultiplication de la transmission, et dans lequel les requêtes de couple aux actionneurs sont prises en main temporairement par un calculateur de la transmission pendant les changements de rapport.

Elle trouve une application privilégiée, lorsque la demande de puissance exprimée par le conducteur est traduite en demande de couple à la roue dans un référentiel (*Force/Vitesse*), où les consignes de couple aux actionneurs sont indépendantes du régime des actionneurs et du rapport de démultiplication courant de la transmission.

Sur un véhicule équipé d'un moteur thermique, la volonté du conducteur est généralement interprétée en demande de puissance. On parle d'interprétation à « *iso-puissance* », dès lors qu'on déduit la même demande de puissance, d'un niveau enfoncement donné de la pédale. La demande de puissance déduite de la position de la pédale, est généralement traduite dans un référentiel *Régime/Couple,* exprimant une demande de couple, fonction du régime du moteur. Dans un tel référentiel, appelé aussi « *référentiel moteur* », le comportement du véhicule est indépendant du rapport de boîte engagé.

Dans les véhicules hybrides, où l'on dispose (au moins) de deux actionneurs pour fournir du couple à la roue, la demande du conducteur, est satisfaite par la somme des couples fournis par chacun d'eux. Il peut aussi être avantageux, de traduire la volonté du conducteur dans sa globalité, dans un « *référentiel véhicule* »*.*

Avec une transmission automatique à passages sous couple (c'est-à-dire sans interruption du couple), le calculateur de la transmission prend temporairement la main sur le calculateur du moteur pendant les passages, pour imposer au moteur un couple propre à faire évoluer progressivement le régime jusqu'au régime de synchronisation sur le nouveau rapport, en fonction du couple qu'elle transmet aux roues au travers des embrayages. Dans un référentiel *Couple/Régime,* les consignes de couple et de régime sont indépendantes de la vitesse du véhicule et du rapport engagé, car cette information est déjà visible dans le régime moteur. La prise en main temporaire du moteur par le calculateur de la transmission, permet de lisser la transmission du couple aux roues indépendamment de l'évolution du rapport de transmission pendant le déroulement du passage.

Dans un référentiel *Force/Vitesse,* la consigne de couple imposée aux moteurs du véhicule est calculée indépendamment de leurs régimes, de sorte que la prise en main temporaire de la consigne de couple par le calculateur de la transmission pendant les passages, ne permet pas d'assurer la continuité et le confort du passage.

La présente invention vise à mieux gérer l'agrément de conduite pendant et après un passage de rapports, sur un véhicule dans lequel la demande de puissance du conducteur est traduite dans un référentiel *Force/Vitesse.*

Dans ce but, elle propose , selon la revendication 1, un procédé d'élaboration de la consigne de couple aux actionneurs d'un groupe motopropulseur.

Cette invention trouve une application privilégiée, mais non limitative, sur un véhicule hybride équipé d'une transmission hybride à double embrayage.

D'autres caractéristiques ou avantages de l'invention, apparaîtront clairement à la lecture de la description suivante, d'un mode de réalisation non limitatif de celle-ci, en se reportant aux dessins annexés, sur lesquels :

- la figure 1 résume les échanges d'information entre un calculateur de moteur et celui de la transmission,
- la figure 2 illustre la prise en main d'un calculateur de transmission pendant un changement de rapport montant,
- la figure 3 illustre l'évolution des cibles de couple sans l'invention,
- la figure 4 illustre la stratégie d'anticipation proposée, et

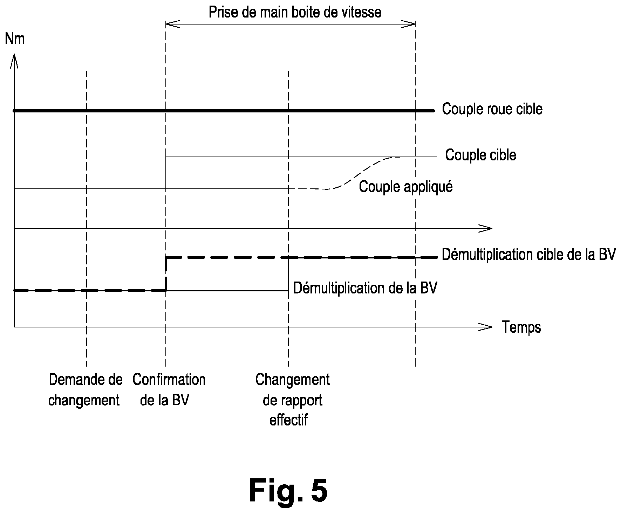

- la figure 5, illustre l'évolution des cibles de couple avec l'invention.

Comme indiqué plus haut, l'agrément de conduite est un élément très important de l'appréciation générale du véhicule par le conducteur. C'est pourquoi, l'un des objectifs principaux des systèmes de contrôle automobiles est de rendre aussi agréables que possible, les réactions du groupe motopropulseur. Dans un véhicule hybride, on dispose d'au moins deux actionneurs capables de fournir du couple à la roue, un moteur thermique et une machine électrique. La demande du conducteur est satisfaite par la somme des couples fournis par la machine électrique et par le moteur thermique. Il est possible d'optimiser la consommation globale d'un groupe motopropulseur (GMP) hybride, en répartissant la demande de couple du conducteur, de 100% électrique à 100% thermique.

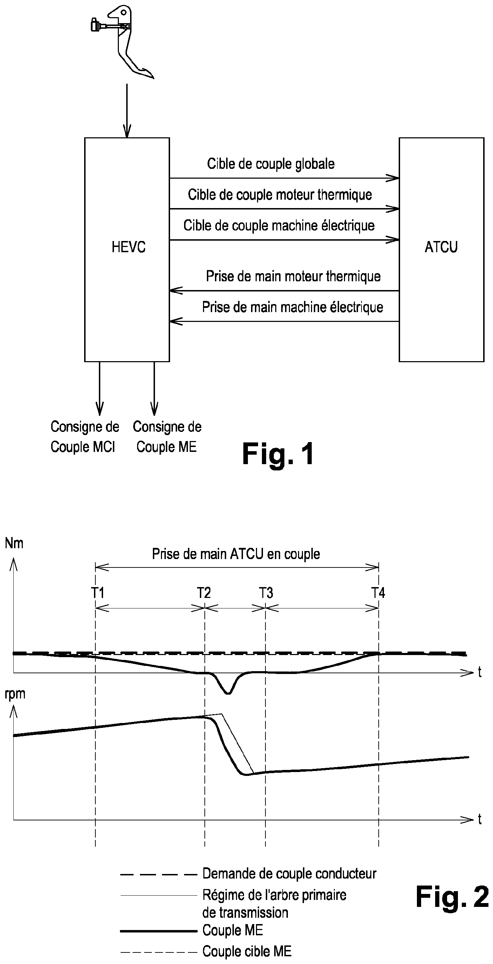

Sur un véhicule thermique, ou hybride, pourvu d'une boîte de vitesses automatique, les changements de rapport sont des situations sensibles, car un passage mal géré, peut être ressenti de façon brutale par le conducteur. Dans la plupart des cas, les stratégies utilisées lors d'un changement de rapport, sont séparées dans le contrôleur du moteur thermique ou hybride (ECM/HEVC), et dans le contrôleur de la boite de vitesses (ATCU). Les principaux échanges d'information pendant un changement de rapport, qui sont mentionnés sur la figure 1, correspondent à une phase de passage de rapport, où le calculateur de la transmission prend temporairement la main sur le contrôle moteur :

- envoi d'une consigne (cible) de couple globale, d'une consigne de couple de moteur thermique (ECM), et d'une consigne de couple de machine électrique, par le contrôle du moteur ou le calculateur de contrôle global d'un véhicule hybride(HEVC), à destination du contrôle de transmission (ACTU),
- prise en main du moteur thermique et de la machine électrique par le calculateur de transmission.

L'HEVC reçoit la demande de couple du conducteur, pour la traduire en demande de couple globale, généralement exprimée au niveau de la roue. La loi de gestion de l'énergie détermine la répartition de couple entre le moteur thermique et la machine électrique. En dehors d'un changement de rapport, ces consignes de couple sont directement envoyées vers les actionneurs de couple (moteur thermique, machines électriques).

Pour assurer un changement de rapport agréable pour le conducteur, il faut minimiser le niveau de choc résultant d'une modification brutale du niveau de couple. On y parvient en synchronisant l'actionneur concerné, avec son régime cible sur le nouveau rapport. La figure 2 illustre un exemple de changement de rapport montant, sur une machine électrique sans embrayage, lorsque la demande de puissance du conducteur est traduite en une demande de couple :

- L'ATCU effectue une prise de main globale (sur les deux actionneurs de couple) de T1 à T4, dont l'objectif est d'effectuer le changement de rapport dans de bonnes conditions ; pendant le changement de rapport, l'ATCU calcule les consignes de couple thermique et électrique ;
- Entre T1 et T2, l'ATCU commence par diminuer le couple demandé à la ME, car un changement de rapport sans choc, ne peut se faire qu'à couple nul ;
- Entre T2 et T3, une fois le couple électrique annulé, l'ATCU module le couple de la machine électrique, afin de synchroniser son régime avec celui de l'arbre primaire, sur le nouveau rapport ;
- Entre T3 et T4, après l'engagement du nouveau rapport à T3, l'ATCU doit converger vers la valeur de couple cible demandée par le conducteur. Cette cible de couple dépend donc de la demande du conducteur, de la répartition de couple demandée par la loi de gestion de l'énergie, et de la démultiplication de la boîte de vitesses.

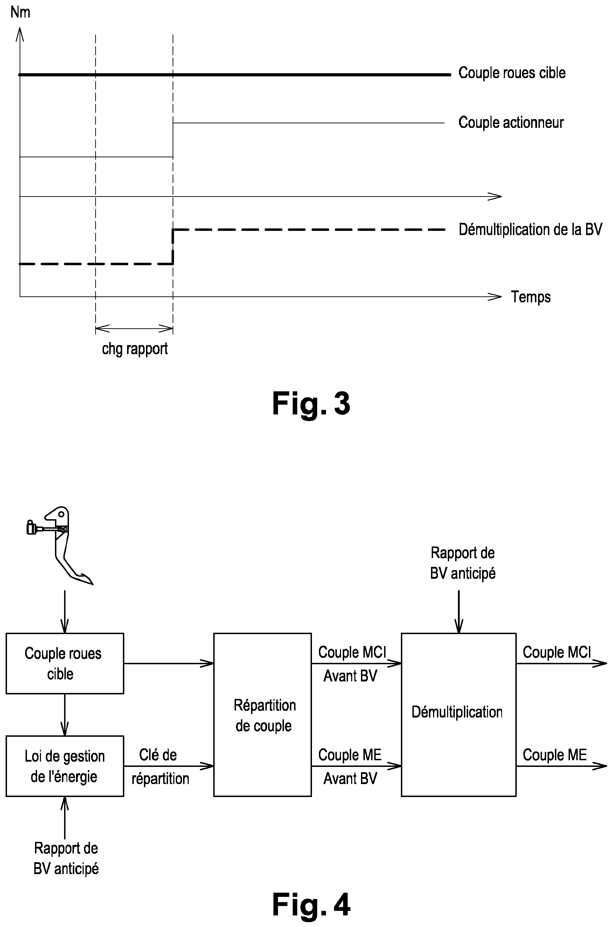

Pour réaliser un couple à la roue stable pendant le passage, la commande en couple envoyée à l'actionneur, doit dépendre de la démultiplication en cours. Actuellement, comme c'est le cas sur la figure 3, la cible de couple, n'est pas mise à jour avant la fin (réalisation) du changement de rapport.

Dans un référentiel, *Couple/Régime,* où la consigne de couple à l'actionneur évolue continument en fonction du régime, elle s'adapte ainsi au rapport de démultiplication instantanée pendant le changement de rapport. Celui-ci peut s'effectuer sans à-coup de couple en fin de passage. Dans un référentiel *Force/Vitesse,* cette adaptation ne se fait pas progressivement, car la consigne de couple à l'actionneur est indépendante du régime de rotation de l'actionneur. Un choc intervient lors de l'établissement du nouveau rapport de transmission, et de la reprise en main simultanée du calcul de cible à l'actionneur par le calculateur moteur (HEVC). Ce choc est inévitable sans anticipation du changement de cible de couple, si la demande de puissance du conducteur est traduite dans un référentiel *Force/Vitesse,* car la consigne de couple est indépendante du régime et du rapport de démultiplication.

La méthode proposée par l'invention concerne des architectures GMP dans lesquelles les requêtes de couple aux actionneurs sont prises en main temporairement par un calculateur de la transmission pendant les changements de rapport. Elle permet d'élaborer la consigne de couple aux actionneurs d'un groupe motopropulseur (GMP) hybride pendant un changement de rapport, dans lequel les actionneurs sont placés en dehors des phases de changement de rapport sous le contrôle exclusif d'un calculateur d'actionneurs (ECM, HEVC) qui impose à ces derniers des requêtes de couple réparties en application d'une une loi de gestion de l'énergie satisfaisant la demande du conducteur en la traduisant en demande de couple global aux roues indépendamment du rapport réel de démultiplication de la transmission.

Comme indiqué plus haut, la méthode trouve un intérêt particulier lorsque la demande de puissance exprimée par le conducteur par l'enfoncement de sa pédale d'accélérateur est traduite en demande de couple à la roue dans un référentiel (*Force/Vitesse*), où les consignes de couple aux actionneurs sont indépendantes du régime des actionneurs, et du rapport de démultiplication courant de la transmission.

Pour effectuer un changement de rapport dans de bonnes conditions, le système de contrôle de la boîte de vitesses doit connaitre le plus tôt possible pendant le changement, la nouvelle cible de couple, afin de tendre vers cette demande avant de rendre la main. Cette exigence est particulièrement forte dans une boîte de vitesses à double embrayage, pilotés par une pompe, pour transmettre tout ou partie plus du couple produit par le moteur. Si la pression est mal gérée, elle peut en effet entraîner une usure prématurée des embrayages, des chocs dus à leurs fermetures trop rapides, une surconsommation de carburant. Par ailleurs tout moteur thermique possède un certain temps de réponse, qui n'est pas négligeable.

La solution proposée vise à ce que le calculateur de la transmission reçoive le plus tôt possible, la cible de couple qu'il doit atteindre pendant un changement de rapport, afin de prendre en compte non seulement le changement de démultiplication, mais également l'évolution de la demande du conducteur, et de la répartition du couple entre les actionneurs, demandée par la loi de gestion de l'énergie. Dans le cas d'une boîte de vitesses automatique sans rupture de couple, comme une boîte de vitesses à double embrayage de type DCT (« *Dual Clutch Transmission* »)*,* où l'on souhaite réaliser des changements de rapport très rapide, la mise à jour du rapport de démultiplication doit se faire le plus tôt possible.

La stratégie d'anticipation illustrée par la figure 4 permet d'anticiper la nouvelle cible de couple, dès le début du changement de rapport :

- la « *Clé de répartition* » mentionnée sur le schéma est la proposition de la loi de gestion de l'énergie pour répartir le couple global entre les actionneurs (moteur thermique, machine(s) électrique (s) ;
- le couple *« MCI avant BV »* est le couple à réaliser par le moteur thermique, exprimé avant l'application de la démultiplication de la boîte de vitesses ;
- le « *Couple ME avant BV* » est le couple à réaliser par la machine électrique, exprimé avant l'application de la démultiplication de la boîte de vitesses.

Pour construire des consignes de couple cible anticipées, deux stratégies doivent avoir un calcul anticipé, la loi de gestion de l'énergie et le calcul de la démultiplication. Conformément à l'invention, le calculateur de la transmission :

- construit par anticipation une consigne de couple anticipée aux roues en fin de changement prenant en compte le prochain rapport de transmission,
- impose dès le début du changement de rapport, une répartition de couple entre les actionneurs déterminée en fonction du prochain rapport (et non le rapport de démultiplication courant), et
- et gère la transition du couple appliqué aux actionneurs, vers des consignes anticipées sur le prochain rapport.

Il construit ainsi une consigne de couple cible anticipée à chaque actionneur, respectant la demande de couple globale aux roues, sur le prochain rapport.

L'anticipation nécessite la prise de main des requêtes de couple par le contrôleur de la boîte de vitesse, afin d'éviter d'éventuelles accélérations, ou décélérations, intempestives. La consigne de couple cible globale, ainsi construite par anticipation, correspond à la somme des consignes de couple par actionneur, respectant la demande de couple globale aux roues, en anticipant sur le prochain rapport de transmission. Les consignes de couple anticipées aux actionneurs sur le prochain rapport ne correspondent pas à la démultiplication en cours : l'anticipation entraîne le calcul d'une valeur de couple aux actionneurs $Couple_{actionneur}$ , ne correspondant pas à la démultiplication en cours $K_{Courant}$ et au couple appliqué à la roue $\boldsymbol{Couple_{roue}}$ :

$$Couple_{roue} = K_{Courant} * Couple_{actionneur} \neq K_{Anticipé} * Couple_{actionneur}$$

Si l'on applique directement la consigne de couple anticipé aux actionneurs, la résultante en couple roue ne sera pas égale à la demande du conducteur. Il en résulte une discontinuité désagréable ou dangereuse pour le conducteur.

Pour éviter ce problème, il convient d'attendre la confirmation de la part de la boîte de vitesse, indiquant qu'elle a bien pris en compte le changement de rapport, et qu'elle a bien pris la main sur les deux actionneurs de couple. Ainsi, il est préférable que le calculateur de transmission confirme aux autres calculateurs du GMP sa prise en compte du changement de rapport et sa prise en main de requêtes de couple aux actionneurs, avant de gérer la transition du couple appliqué aux actionneurs, vers les consignes anticipées.

**Revendications**

**1.** Procédé d'élaboration de la consigne de couple aux actionneurs d'un groupe motopropulseur (GMP) hybride disposant d'au moins deux actionneurs capables de fournir du couple à la roue, pendant un changement de rapport, selon lequel les actionneurs sont placés en dehors des phases de changement de rapport sous le contrôle exclusif d'un calculateur d'actionneurs (ECM, HEVC) qui impose à ces derniers des requêtes de couple réparties en application d'une une loi de gestion de l'énergie satisfaisant une demande du conducteur traduite en demande de couple global aux roues indépendamment du rapport réel de démultiplication de la transmission, et dans lequel les requêtes de couple aux actionneurs sont calculées temporairement par un calculateur de la transmission pendant les changements de rapport, **caractérisé en ce que** le calculateur de transmission :

- construit par anticipation une consigne de couple anticipée aux roues en fin de changement de rapport, prenant en compte le nouveau rapport de transmission,
- impose dès le début du changement de rapport, une répartition de couple entre les actionneurs, déterminée en fonction du nouveau rapport,
- construit une consigne de couple cible anticipée pour chaque actionneur sur le nouveau rapport, respectant la demande de couple globale aux roues sur le nouveau rapport,
- et gère la transition du couple appliqué aux actionneurs, vers les consignes de couple cible anticipées sur le nouveau rapport, pour chaque actionneur.

2. Procédé d'élaboration de consigne de couple selon la revendication 1, **caractérisé en ce que** les consignes de couple cible anticipées aux actionneurs, respectent la demande de couple sur le nouveau rapport.

3. Procédé d'élaboration de consigne de couple selon la revendication 1 ou 2, **caractérisé en ce que** le calculateur de transmission confirme aux autres calculateurs du GMP sa prise en compte du changement de rapport et sa prise en main de requêtes de couple aux actionneurs, avant de gérer la transition du couple appliqué aux actionneurs, vers les consignes anticipées.

4. Procédé d'élaboration de consigne de couple selon la revendication 1, 2 ou 3, **caractérisé en ce que** la demande de puissance exprimée par le conducteur par l'enfoncement de sa pédale d'accélérateur est traduite en demande de couple à la roue dans un référentiel (*Force/Vitesses*), où les consignes de couple aux actionneurs sont indépendantes du régime des actionneurs et du rapport de démultiplication courant de la transmission.

## Patentansprüche

1. Verfahren zur Erstellung des Drehmomentsollwerts an den Aktuatoren eines Hybridantriebsstrangs (GMP), der über wenigstens zwei Aktuatoren verfügt, die geeignet sind, dem Rad Drehmoment bereitzustellen, während eines Gangwechsels, wobei die Aktuatoren außerhalb der Gangwechselphasen unter die ausschließliche Kontrolle eines Aktuatorenrechners (ECM, HEVC) gestellt werden, der diesen Drehmomentanforderungen auferlegt, die unter Anwendung eines Energiemanagement-Gesetzes verteilt werden, wobei eine Anforderung des Fahrers erfüllt wird, die in eine Gesamtdrehmomentnachfrage an den Rädern unabhängig vom Ist-Übersetzungsverhältnis des Getriebes übersetzt wird, und wobei die Drehmomentanforderungen an den Aktuatoren während der Gangwechsel temporär von einem Rechner des Getriebes berechnet werden, **dadurch gekennzeichnet, dass** der Getrieberechner:

- im Voraus einen antizipierten Drehmomentsollwert an den Rädern am Ende des Gangwechsels bildet, wobei das neue Übersetzungsverhältnis berücksichtigt wird,
- ab Beginn des Gangwechsels eine Drehmomentverteilung zwischen den Aktuatoren erzwingt, die in Abhängigkeit vom neuen Gang bestimmt wird,
- einen antizipierten Zieldrehmomentsollwert für jeden Aktuator für den neuen Gang bildet, wobei die Gesamtdrehmomentnachfrage an den Rädern für den neuen Gang eingehalten wird,
- und für jeden Aktuator den Übergang vom Drehmoment, das an den Aktuatoren anliegt, zu den antizipierten Zieldrehmomentsollwerten für den neuen Gang verwaltet.

2. Verfahren zur Erstellung eines Drehmomentsollwerts nach Anspruch 1, **dadurch gekennzeichnet, dass** die antizipierten Zieldrehmomentsollwerte an den Aktuatoren die Drehmomentnachfrage für den neuen Gang einhalten.

3. Verfahren zur Erstellung eines Drehmomentsollwerts nach Anspruch 1 oder 2, **dadurch gekennzeichnet, dass** der Getrieberechner den anderen Rechnern des GMP seine Berücksichtigung des Gangwechsels und seine Übernahme von Drehmomentanforderungen an den Aktuatoren bestätigt, bevor er den Übergang vom Drehmoment, das an den Aktuatoren anliegt, zu den antizipierten Sollwerten verwaltet.

4. Verfahren zur Erstellung eines Drehmomentsollwerts nach Anspruch 1, 2 oder 3, **dadurch gekennzeichnet, dass** die Leistungsnachfrage, die vom Fahrer durch die Betätigung seines Fahrpedals ausgedrückt wird, in eine Drehmomentnachfrage am Rad in einem *(Kraft/Geschwindigkeiten)-Bezugssystem* übersetzt wird, wobei die Drehmomentsollwerte an den Aktuatoren von der Drehzahl der Aktuatoren und dem aktuellen Übersetzungsverhältnis des Getriebes unabhängig sind.

**Claims**

1. Method for generating the torque setpoint to the actuators of a hybrid power train (GMP) having at least two actuators capable of supplying torque to the wheel, during a gear change, according to which the actuators are placed outside of the gear change phases under the exclusive control of an actuator computer (ECM, HEVC) which imposes on the latter torque requests allocated by application of an energy management law satisfying a driver demand translated into overall torque demand to the wheels independently of the actual gear ratio of the transmission, and in which the torque requests to the actuators are calculated temporarily by a computer of the transmission during the gear changes, **characterized in that** the transmission computer:

   - constructs in advance an anticipated torque setpoint to the wheels at the end of a gear change, taking account of the new transmission ratio,
   - imposes, from the start of the gear change, an allocation of torque between the actuators, determined as a function of the new ratio,
   - constructs an anticipated target torque setpoint for each actuator on the new ratio, observing the overall torque demand to the wheels on the new ratio,
   - and manages the transition of the torque applied to the actuators, to the anticipated target torque setpoints on the new ratio, for each actuator.

2. Torque setpoint generation method according to Claim 1, **characterized in that** the anticipated target torque setpoints to the actuators observe the torque demand on the new ratio.

3. Torque setpoint generation method according to Claim 1 or 2, **characterized in that** the transmission computer confirms to the other computers of the GMP that it is taking account of the gear change and it is taking control of the torque requests to the actuators, before managing the transition of the torque to the actuators, to the anticipated setpoints.

4. Torque setpoint generation method according to Claim 1, 2 or 3, **characterized in that** the power demand expressed by the driver by the depression of the accelerator pedal is translated into a torque demand to the wheel in a reference frame *(force/speeds)*, in which the torque setpoints to the actuators are independent of the speed of the actuators and of the current gear ratio of the transmission.

Cible de couple globale

Cible de couple moteur thermique

Cible de couple machine électrique

HEVC

ATCU

Prise de main moteur thermique

Prise de main machine électrique

Consigne de
Couple MCI

Consigne de
Couple ME

# Fig. 1

Nm

Prise de main ATCU en couple

T1          T2      T3          T4

t

rpm

t

— — — — Demande de couple conducteur

———— Régime de l'arbre primaire
de transmission

———— Couple ME

— — — — Couple cible ME

# Fig. 2

7

Nm

Couple roues cible

Couple actionneur

Démultiplication de la BV

Temps

chg rapport

# Fig. 3

Rapport de
BV anticipé

| Couple roues cible | | Répartition de couple | Couple MCI Avant BV | Démultiplication | Couple MCI |

Couple roues
cible

Loi de gestion
de l'énergie

Clé de
répartition

Répartition
de couple

Couple MCI
Avant BV

Démultiplication

Couple MCI

Couple ME
Avant BV

Couple ME

Rapport de
BV anticipé

# Fig. 4

Fig. 5